# EUROPEAN PATENT APPLICATION

(11) **EP 3 009 690 A1**
(43) Date of publication of application: **20.04.2016**
(21) Application number: 13886794.0
(22) Date of filing: 14.06.2013
(51) Int. Cl.: F15B 13/02

(54) **FLOW RATE CONTROL VALVE FOR CONSTRUCTION MACHINE**

(71) Applicant: Volvo Construction Equipment AB, 631 85 Eskilstuna (SE)
(72) Inventor: PARK, Sung-Bok, Changwon-si Gyeongsangnam-do 641-906 (KR); CHOI, Jin-Youn, Changwon-si Gyeongsangnam-do 631-150 (KR)
(74) Representative: Stöckeler, Ferdinand
(86) International application number: PCT/KR2013/005257
(87) International publication number: WO 2014/200131

(57) **Abstract**

Disclosed is a flow rate control valve for a construction machine. A flow rate control valve for a construction machine comprises: a valve body having a pump channel for receiving operating oil from a hydraulic pump, a supply channel connected to the pump channel, and an actuator port connected to a hydraulic actuator; a spool installed inside the valve body to be switchable such that, when switched in response to application of signal pressure, the spool selectively causes the supply channel and the actuator port to communicate with each other; a tank channel installed inside the valve body and connected to an operating oil tank; and an orifice formed in the spool to have an inlet formed on an end and an outlet communicating with the tank channel, wherein, when the spool is initially actuated, a part of the signal pressure is discharged to the operating oil tank via the orifice.

## Description

### TECHNICAL FIELD

The present invention relates to a flow rate control valve for a construction machine. More particularly, the present invention relates to such a flow rate control valve for a construction machine, which can control hydraulic fluid supplied from a hydraulic pump to a hydraulic actuator.

### BACKGROUND OF THE INVENTION

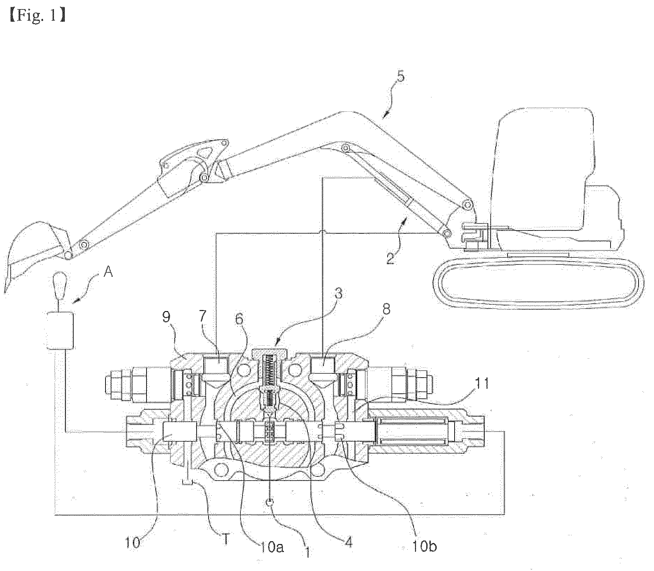

Referring to Figs. 1 to 3, in accordance with an embodiment of the prior art, there is shown a flow rate control valve 3 for a construction machine, which is configured to control hydraulic fluid supplied from a hydraulic pump 1 to a hydraulic actuator 2 (e.g., boom cylinder) when a spool is shifted in response to a signal pressure applied thereto from a remote control valve (RCV) A.

The flow rate control valve for a construction machine includes:
a valve body 9 that includes a pump path 4 to which hydraulic fluid from a hydraulic pump 1 is supplied, a supply path 6 connected to the pump path 4, and actuator ports 7 and 8 connected to a hydraulic actuator 2;
a spool 10 that is installed in the valve body 9 and is shifted in response to the signal pressure applied thereto to cause the supply path 6 and the actuator port 7 or 8 to fluidically communicate with each other selectively; and
a tank path 11 that is formed in the valve body 9 and is connected to a hydraulic fluid tank T so that the hydraulic fluid from the hydraulic pump 1 is supplied to the hydraulic actuator 2 through the actuator port 7 at one side of the valve body 9 and hydraulic fluid discharged from the hydraulic actuator 2 is returned to the hydraulic fluid tank T through the actuator port 8 at the other side of the valve body 9 in response to the shift of the spool 10.

When a signal pressure from the remote control valve A is applied to a signal pressure port at a left side of the valve body 9 to cause the spool 10 to be shifted to the right on the drawing sheet, the hydraulic fluid from the hydraulic pump 1 is supplied to the hydraulic actuator 2 via the pump path 4, the supply path 6, a notch 10a of the spool 10, and the actuator port 7 in this order.

Simultaneously, the hydraulic fluid discharged from the hydraulic actuator 2 is returned to the hydraulic fluid tank T via the actuator port 8, a notch 10b of the spool 10, and the tank path 11 in this order.

Thus, the hydraulic actuator 2 can be driven in a stretchable manner to perform a boom-up operation.

The flow rate control valve 3 in accordance with the prior art allows the spool 10 to be shifted in response to the signal pressure applied to the spool by the manipulation of the remote control valve A to control the hydraulic fluid supplied from the hydraulic pump 1 to the hydraulic actuator 2 and operate the work apparatus such as a boom, an arm, or a bucket through the drive of the hydraulic actuator 2.

In this case, the remote control valve A is manipulated by using an operator's hand or foot, and thus there is a limitation in finely and smoothly manipulating the remote control valve A to the extent to which the operator desires. For example, this is the case where the remote control valve A is manipulated in an initial stage to initiate the leveling work in a state in which the work apparatus 5 is stretched to the maximum.

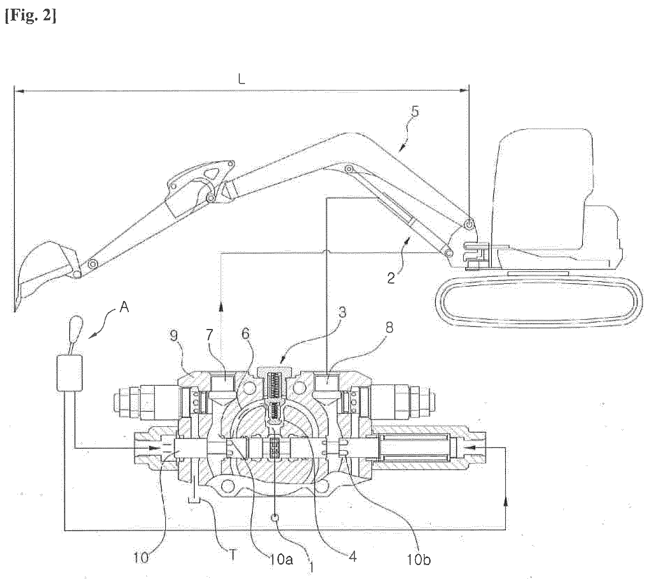

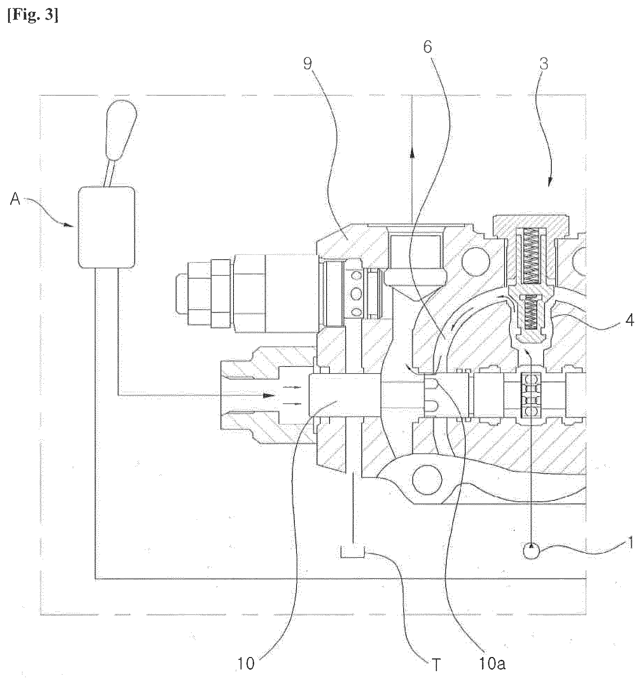

As shown in Figs. 2 and 3, in the case of the leveling work, an arm manipulation amount (i.e., in an arm-in or arm-out operation) is relatively larger than a boom manipulation amount (i.e., in a boom-up or boom-down operation).

As described above, even in the case where the manipulation amount of the hydraulic actuator 2 is small, a displacement amount at a distal end of the bucket where the leveling work is actually carried out is increased due to a length L of the work apparatus 5. In other words, even in the case where the hydraulic actuator 2 is unstably manipulated in a significantly small manipulation amount, the distal end of the bucket is moved sensitively moved, thus resulting in a problem in that the leveling work cannot be smoothly performed.

### SUMMARY OF THE INVENTION

Accordingly, the present invention has been made to solve the aforementioned problems occurring in the prior art, and it is an object of the present invention to provide a flow rate control valve for a construction machine, in which a spool of the flow rate control valve that controls hydraulic fluid supplied to a work apparatus is prevented from being excessively manipulated in an initial stage of the operation of the spool, and a shock can be prevented from occurring in the work apparatus due to the sudden shift of the spool at the initial operation stage of the spool.

### TECHNICAL SOLUTION

To achieve the above object, in accordance with an embodiment of the present invention, there is provided a flow rate control valve for a construction machine, including:
a valve body including a pump path to which hydraulic fluid from a hydraulic pump is supplied, a supply path connected to the pump path, and actuator ports connected to a hydraulic actuator;
a spool installed in the valve body and shifted in response to a signal pressure applied thereto to cause the supply path and the actuator port to fluidically communicate with each other selectively;
a tank path installed in the valve body and connected to a hydraulic fluid tank; and
an orifice formed in the spool, the orifice including an inlet formed at an end portion to which the signal pressure is applied and an outlet formed to fluidically communicate with the tank path,
wherein part of the signal pressure is discharged to the hydraulic fluid tank through the orifice at an initial stage of the operation of the spool.

In the flow rate control valve, the hydraulic actuator may include at least one of a boom cylinder, an arm cylinder, and a bucket cylinder.

In the flow rate control valve, the outlet 13 of the orifice may be formed at a position that is spaced apart by a predetermined distance from the end portion of the spool to which the signal pressure is applied so that the orifice is closed after the spool is moved over a predetermined distance in response to the signal pressure applied thereto.

In the flow rate control valve, the orifice may be formed at at least one of both ends of the spool.

### ADVANTAGEOUS EFFECT

The flow rate control valve for a construction machine in accordance with the present invention as constructed above has the following advantages.

The excessive manipulation of the spool of the flow rate control valve can be avoided at the initial stage of the operation of the spool. In addition, a shock can be prevented from occurring in the work apparatus due to the sudden shift of the spool.

Moreover, the shock occurring at the initial stage of the operation of the spool of the flow rate control valve is minimized so that the work apparatus can be performed smoothly, thereby improving the workability during the leveling work using an excavator and relieving an operator's fatigue.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a diagrammatic view showing a neutral state of a spool in a flow rate control valve for a construction machine in accordance with the prior art;
Fig. 2 is a diagrammatic view showing an initial stage of the operation of the spool in the flow rate control valve shown in Fig. 1;
Fig. 3 is an enlarged view showing main elements of the flow rate control valve in initial stage of the operation of the spool shown in Fig. 2;
Fig. 4 is a diagrammatic view showing a neutral state of a spool in a flow rate control valve for a construction machine in accordance with a preferred embodiment of the present invention;
Fig. 5 is a diagrammatic view showing an initial stage of the operation of the spool in the flow rate control valve shown in Fig. 4;
Fig. 6 is an enlarged view showing main elements of the flow rate control valve in initial stage of the operation of the spool shown in Fig. 5;
Fig. 7 is a diagrammatic view showing a state in which the spool is moved over a predetermined distance in the flow rate control valve shown in Fig. 4; and
Fig. 8 is an enlarged view showing main elements of the flow rate control valve in which the spool shown in Fig. 7 is moved over a predetermined distance.

### * Explanation on reference numerals of main elements in the drawings *

- 1:: hydraulic pump
- 2:: hydraulic actuator
- 3:: flow rate control valve
- 4:: pump path
- 5:: work apparatus
- 6:: supply path
- 7, 8:: actuator port
- 9:: valve body
- 10:: spool
- 11:: tank path
- 12:: inlet
- 13:: outlet

### DETAILED DESCRIPTION OF THE INVENTION

Hereinafter, a flow rate control valve for a construction machine in accordance with a preferred embodiment of the present invention will be described in detail with reference to the accompanying drawings. The matters defined in the description, such as the detailed construction and elements, are nothing but specific details provided to assist those of ordinary skill in the art in a comprehensive understanding of the invention, and the present invention is not limited to the embodiments disclosed hereinafter.

In order to definitely describe the present invention, a portion having no relevant to the description will be omitted, and through the specification, like elements are designated by like reference numerals.

In the specification and the claims, when a portion includes an element, it is meant to include other elements, but not exclude the other elements unless otherwise specifically stated herein.

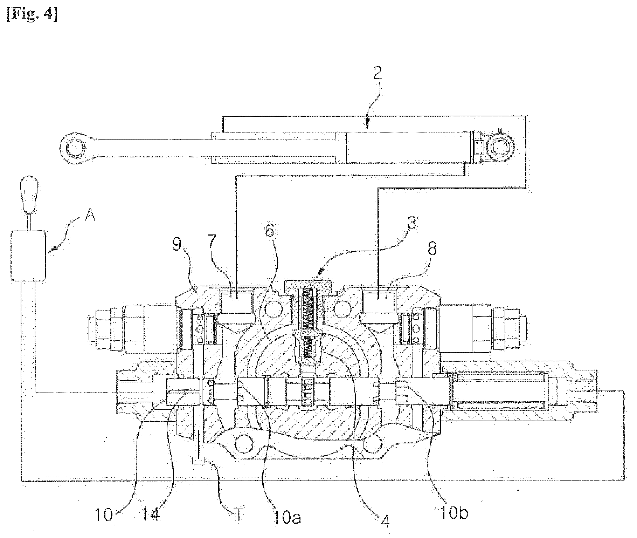

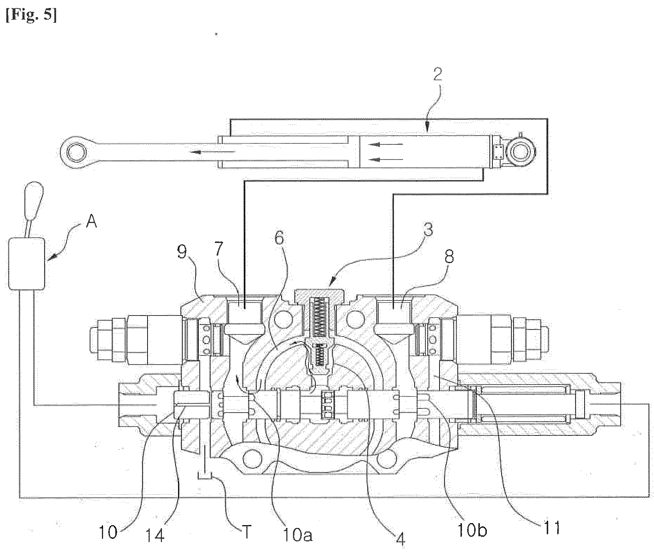

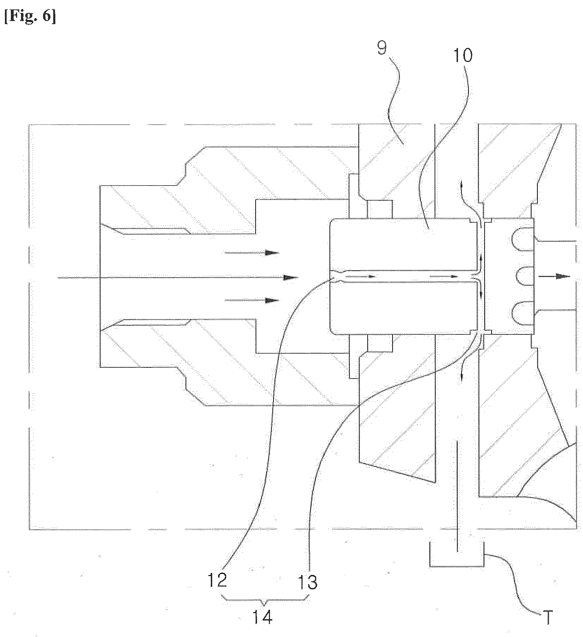

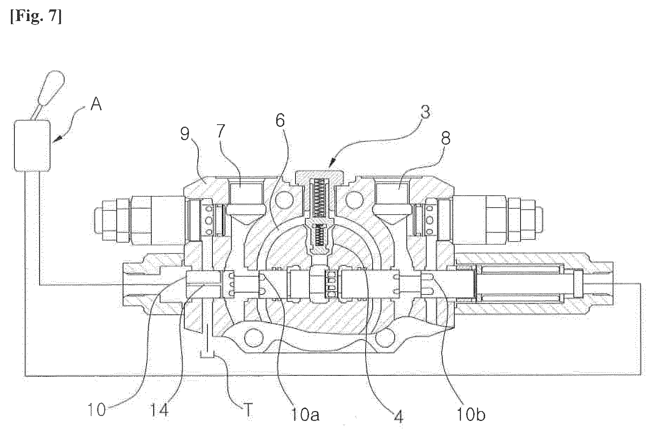

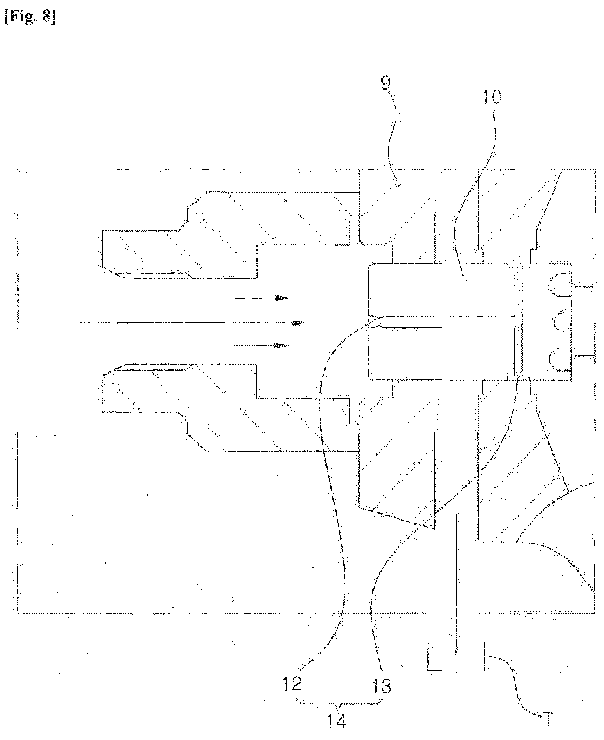

Fig. 4 is a diagrammatic view showing a neutral state of a spool in a flow rate control valve for a construction machine in accordance with a preferred embodiment of the present invention, Fig. 5 is a diagrammatic view showing an initial stage of the operation of the spool in the flow rate control valve shown in Fig. 4, Fig. 6 is an enlarged view showing main elements of the flow rate control valve in initial stage of the operation of the spool shown in Fig. 5, Fig. 7 is a diagrammatic view showing a state in which the spool is moved over a predetermined distance in the flow rate control valve shown in Fig. 4, and Fig. 8 is an enlarged view showing main elements of the flow rate control valve in which the spool shown in Fig. 7 is moved over a predetermined distance.

Referring to Figs. 4 to 8, in accordance with an embodiment of the present invention, there is shown a flow rate control valve 3 for a construction machine, which is configured to control hydraulic fluid supplied from a hydraulic pump 1 to a hydraulic actuator 2 when a spool is shifted in response to a signal pressure applied thereto from a remote control valve (RCV) A.

The flow rate control valve 3 for a construction machine includes:
a valve body 9 that includes a pump path 4 to which the hydraulic fluid from the hydraulic pump 1 is supplied, a supply path 6 connected to the pump path 4, and actuator ports 7 and 8 connected to a hydraulic actuator 2;
a spool 10 that is installed in the valve body 9 and is shifted in response to the signal pressure applied thereto to cause the supply path 6 and the actuator port 7 or 8 to fluidically communicate with each other selectively;
a tank path 11 that is installed in the valve body 9 and is connected to a hydraulic fluid tank T so that the hydraulic fluid from the hydraulic pump 1 is supplied to the hydraulic actuator 2 through the actuator port 7 at one side of the valve body 9 and hydraulic fluid discharged from the hydraulic actuator 2 is returned to the hydraulic fluid tank T through the actuator port 8 at the other side of the valve body 9 in response to the shift of the spool 10; and
an orifice 14 that is formed in the spool, the orifice including an inlet 12 formed at an end portion to which the signal pressure is applied and an outlet 13 formed to fluidically communicate with the hydraulic fluid tank T,
wherein part of the signal pressure is discharged to the hydraulic fluid tank T through the orifice 14 at an initial stage of the operation of the spool 10.

The hydraulic actuator 2 is at least one of a boom cylinder, an arm cylinder, and a bucket cylinder.

The outlet 13 of the orifice 14 is formed at a position that is spaced apart by a predetermined distance from the end portion of the spool 10 to which the signal pressure is applied so that the orifice 14 is closed after the spool 10 is moved over a predetermined distance in response to the signal pressure applied thereto.

The orifice 14 is formed at at least one of both ends of the spool 10.

For example, in the drawings, the orifice 14 is formed at a left end of the spool 10.

According to the configuration as described above, as shown in Fig. 4, a lever of the remote control valve A is held in a neutral position, and thus the spool 10 of the flow rate control valve 3 is also held in a neutral position. For this reason, because the supply path 6 is blocked from fluidically communicating with the pump path 4 to which the hydraulic fluid from the hydraulic pump 1 is supplied, the hydraulic fluid is not supplied to the hydraulic actuator 2.

As shown in Figs. 5 and 6, when the lever of the remote control valve A is manipulated to the right on the drawing sheet, the signal pressure is applied to a signal pressure port at a left side of the flow rate control valve 3 to press a left end of the spool 10 to cause the spool to be shifted to the right on the drawing sheet. The hydraulic fluid from the hydraulic pump is supplied to the hydraulic actuator 2 via the pump path 4, the supply path 6, a notch 10a of the spool 10, and the actuator port 7 in this order in response to the shift of the spool 10. In this case, the hydraulic fluid discharged from the hydraulic actuator 2 is returned to the hydraulic fluid tank T via the actuator port 8, a notch 10b of the spool 10, and the tank path 11 in this order. Thus, the hydraulic actuator 2 can be driven in a stretchable manner to perform a boom-up operation.

By virtue of the manipulation of the remote control valve, part of the signal pressure applied to the signal pressure port of the valve body 9 shifts the spool 10 to cause the hydraulic fluid from the hydraulic pump to be supplied to the hydraulic actuator 2, and part of the signal pressure is introduced into the spool 10 through the inlet 12 of the orifice 14 formed at the end portion of the spool 10 and then is bled to the hydraulic fluid tank T through the outlet 13 of the orifice 14.

In other words, part of the signal pressure applied from the remote control valve A to the spool 10 is bled to the hydraulic fluid tank T through the orifice 14 so that the sudden operation of the spool 10 can be prevented at the initial operation stage of the spool 10. Thus, the shock or the sudden operation of the hydraulic actuator 2 is prevented, and thus the work apparatus 5 can be operated smoothly.

As shown in Figs. 7 and 8, when the signal pressure is applied to the spool 10 by the manipulation of the remote control valve A, the spool 10 is shifted over a predetermined distance to cause the orifice 14 to be closed. In other words, the outlet 13 of the orifice 14 is closed by the inner periphery of the valve body 9, which corresponds to the outer periphery of the spool 10. For this reason, it is possible to prevent an unnecessary loss of flow rate that occurs when the signal pressure applied to the valve body 9 is drained to the hydraulic fluid tank T by the manipulation of the remote control valve A

### INDUSTRIAL APPLICABILITY

In accordance with the flow rate control valve for a construction machine of the present invention as constructed above, the excessive manipulation of the spool of the flow rate control valve can be avoided at the initial stage of the operation of the spool. In addition, the sudden shift of the spool of the flow rate control valve is restricted so that the shock and the sudden operation that occur during the initial operation of the work apparatus can be minimized.

Further, the spool of the flow rate control valve is shifted over a predetermined distance to cause the orifice 14 to be closed so that the unnecessary loss of flow rate can be prevented.

While the present invention has been described in connection with the specific embodiments illustrated in the drawings, they are merely illustrative, and the invention is not limited to these embodiments. It is to be understood that various equivalent modifications and variations of the embodiments can be made by a person having an ordinary skill in the art without departing from the spirit and scope of the present invention. Therefore, the true technical scope of the present invention should not be defined by the above-mentioned embodiments but should be defined by the appended claims and equivalents thereof.

## Claims

1. A flow rate control valve for a construction machine comprising:
a valve body including a pump path to which hydraulic fluid from a hydraulic pump is supplied, a supply path connected to the pump path, and actuator ports connected to a hydraulic actuator;
a spool installed in the valve body and shifted in response to a signal pressure applied thereto to cause the supply path and the actuator port to fluidically communicate with each other selectively;
a tank path installed in the valve body and connected to a hydraulic fluid tank; and
an orifice formed in the spool, the orifice including an inlet formed at an end portion to which the signal pressure is applied and an outlet formed to fluidically communicate with the tank path,
wherein part of the signal pressure is discharged to the hydraulic fluid tank through the orifice at an initial stage of the operation of the spool.

2. The flow rate control valve according to claim 1, wherein the hydraulic actuator comprises at least one of a boom cylinder, an arm cylinder, and a bucket cylinder.

3. The flow rate control valve according to claim 1, wherein the outlet of the orifice is formed at a position that is spaced apart by a predetermined distance from the end portion of the spool to which the signal pressure is applied so that the orifice is closed after the spool is moved over a predetermined distance in response to the signal pressure applied thereto.

4. The flow rate control valve according to claim 1, wherein the orifice is formed at at least one of both ends of the spool.
